# EUROPÄISCHE PATENTSCHRIFT

(11) **EP 2 945 836 B1**
(45) Veröffentlichungstag und Bekanntmachung des Hinweises auf die Patenterteilung: **06.06.2018**
(21) Anmeldenummer: 14700452.7
(22) Anmeldetag: 09.01.2014
(51) Int. Cl.: B62D 25/00, B60R 22/18, F16B 5/02, F16B 11/00

(54) **SCHALENSTRUKTUR MIT KRAFTEINLEITUNGSPUNKT**
SHELL STRUCTURE COMPRISING FORCE TRANSMISSION POINT
STRUCTURE EN FORME DE COQUE MUNIE D'UN POINT D'APPLICATION DE FORCE

(30) Priorität: 18.01.2013 DE 102013200699
(43) Veröffentlichungstag der Anmeldung: 25.11.2015
(73) Patentinhaber: Bayerische Motoren Werke Aktiengesellschaft, 80809 München (DE)
(72) Erfinder: LENZ, Juergen, 85777 Fahrenzhausen (DE); SCHNAUFER, Thomas, 82386 Oberhausen (DE); BEIL, Andreas, 80807 München (DE); GONDA, Mihaly, 80469 München (DE)
(86) Internationale Anmeldenummer: PCT/EP2014/050292
(87) Internationale Veröffentlichungsnummer: WO 2014/111301

(56) Entgegenhaltungen:
- EP-A1- 2 141 370
- US-A- 3 458 233
- US-A1- 2002 190 518
- US-A1- 2003 094 804
- US-B1- 6 302 477

## Beschreibung

Die vorliegende Erfindung betrifft eine Schalenstruktur mit einem Krafteinleitungspunkt nach dem Oberbegriff des Anspruchs 1.

Es ist bekannt, in Bauteilen aus CFK, die in Schalenbauweise hergestellt sind, Krafteinleitungspunkte durch in das CFK integrierte Verbindungselemente, wie z.B. eine einlaminierte Mutter, vorzusehen. Dieses Verfahren ist mit hohem zeitlichem Aufwand verbunden und erlaubt in der Regel keine nachträgliche Änderung. Mit anderen Worten, nach abgeschlossenem Laminierungsvorgang ist mit diesem Verfahren kein Verbindungselement mehr in das Bauteil integrierbar. Im Ergebnis ist dieses Verfahren mit der geforderten Taktzeit bei der Bauteilherstellung für den Serienprozess momentan nicht darstellbar.

Aus der Fertigung von Stahl- oder Aluminiumkarosserien ist es bekannt, Verschraubungen mit höherer Festigkeitsklasse mit Hilfe von Einpresselementen oder Schweißelementen (Einpressbolzen, Einpressmutter, Schweißbolzen, Schweißmutter) zu verwirklichen. Bei CFK-Bauteilen ist dies oft wegen der starken Kontaktkorrosion und Beschränkungen im Hinblick auf die zulässige Flächenpressung nicht möglich.

Aus der DE 103 05 015 A1 ist eine Krafteinleitungsvorrichtung zur Fixierung in oder an einem Strukturbauteil sowie ein unter Verwendung mindestens einer derartigen Krafteinleitungsvorrichtung aufgebautes Strukturbauteil bekannt, das zur Verbesserung der mechanischen Eigenschaften und für eine preiswertere Fertigung als hybrides Bauteil ausgeführt ist mit einem Einsatz aus Metall, der in einer Struktur aus Kunststoff fixiert ist, wobei die Struktur zum Fixieren, wie z. B. Einkleben, in einer Ausnehmung, wie z. B. einer tellerförmigen Einprägung, des Strukturbauteils ausgebildet ist. Die Herstellung der Fixierungsstruktur sowie das Vorsehen der Ausnehmung an dem Bauteil sind vergleichsweise aufwändig. Durch die Ausnehmung wird auf der Sichtseite des Bauteils eine erhabene Struktur geschaffen, welche aus ästhetischen und/oder konstruktiven Gründen störend sein kann. Da die seitliche Ausdehnung der Fixierungsstruktur auch aus Gewichtsgründen begrenzt ist, ist die Krafteinleitung vergleichsweise punktförmig und sind die einleitbaren Kräfte beschränkt. Auch kann durch die Gewindebohrung in der Fixierungsstruktur unter Umständen Feuchtigkeit in das Innere des Bauteils dringen. Eine ähnliche Struktur ist aus der US6302477 bekannt. Eine Aufgabe der vorliegenden Erfindung besteht darin, eine Schalenstruktur mit einem Krafteinleitungspunkt bereitzustellen, welche die Nachteile des Standes der Technik wenigstens teilweise vermeidet. Insbesondere besteht eine Aufgabe der vorliegenden Erfindung darin, eine Krafteinleitungsstruktur an CFK-Bauteilen mit höherer Festigkeit, mit geringerer Wahrscheinlichkeit, diese zu beschädigen, unter Verringerung korrosiver Nachteile und mit einer verteilten Krafteinleitung in das CFK Bauteil für industrialisierte Anwendung mit hohen Stückzahlen zu schaffen. Eine weitere Aufgabe der Erfindung besteht darin, eine Krafteinleitungsstruktur konstruktiv und fertigungstechnisch zu vereinfachen und größere einleitbare Kräfte zu erlauben. Eine noch weitere Aufgabe der Erfindung besteht darin, das Eindringen von Feuchtigkeit durch den Krafteinleitungspunkt zu erschweren.

Wenigstens eine der vorstehend genannten Aufgaben wird wenigstens in Teilaspekten durch eine erfindungsgemäße Schalenstruktur mit den Merkmalen des Anspruchs 1 gelöst. Bevorzugte Ausführungsformen und vorteilhafte Weiterbildungen sind in den Unteransprüchen angegeben.

Erfindungsgemäß wird eine Schalenstruktur mit einem Krafteinleitungspunkt vorgeschlagen, wobei an dem Krafteinleitungspunkt eine Krafteinleitungsstruktur vorgesehen ist, wobei die Krafteinleitungsstruktur ein Beschlagteil mit einem Befestigungselement aufweist, wobei das Beschlagteil mit der Schalenstruktur verbunden ist, und wobei ferner das Beschlagteil eine Anlagefläche mit der Schalenstruktur aufweist und die Anlagefläche mit der Schalenstruktur verspannbar oder verspannt ist, wobei die Schalenstruktur aus faserverstärktem Kunststoff hergestellt ist. Unter einer Schalenstruktur ist im Sinne der Erfindung eine Struktur zu verstehen, die Teil eines flächenhaften, gekrümmten oder ebenen oder teilweise gekrümmten und teilweise ebenen Gebildes ist. Flächenhaft bedeutet, dass die Strukturdicke sehr viel geringer als die übrigen Abmessungen ist. Unter einer Krafteinleitungsstruktur ist im Sinne der Erfindung eine Struktur zu verstehen, die ausgelegt und eingerichtet ist, Kräfte aufzunehmen und in die Schalenstruktur zu leiten. Unter einem Beschlagteil ist im Sinne der Erfindung eine Raumform zu verstehen, die der Krafteinleitungsstruktur Dimension und Stabilität verleiht. Unter einem Befestigungselement ist im Sinne der Erfindung eine Einrichtung zu verstehen, die zur Befestigung eines Bauteils dient, über welches Kraft in die Krafteinleitungsstruktur geleitet wird. Eine Anlagefläche mit der Schalenstruktur ist im Sinne der Erfindung so zu verstehen, dass die Anlagefläche flächig an der Schalenstruktur anliegt. Ein flächiges Anliegen ist dabei so zu verstehen, dass keine elastischen Zwischenlagen wie etwa von Klebstoff oder dergleichen zwischen Anlagefläche und Schalenstruktur vorhanden sind. Allerdings ist denkbar, dass eine dünne, wenigstens im Wesentlichen unelastische Zwischenlage etwa für Isolationszwecke, zum Korrosionsschutz oder zur mechanischen Kraftvermittlung vorgesehen ist, wobei mit einer unelastischen Zwischenlage ein solche Zwischenlage gemeint ist, die unter Druckbelastung im Vergleich mit dem Lasteinleitungsteil oder der Schalenstruktur einen wenigstens im Wesentlichen unbedeutenden Verformungsweg zur Gesamtverformung aufweist. Das heißt, es kommt hier nicht so sehr auf die Materialeigenschaft wie etwa den Elastizitätsmodul an, sondern auf den Verformungsweg, der bei einer verschwindend dünnen Zwischenlage vernachlässigbar sein kann. Eine solche Zwischenschicht kann etwa eine Lackschicht, eine Papierlage oder Kunststoff-Folie sein. Mit anderen Worten, das Anliegen soll eine direkte Kraftübertragung zwischen der Anlagefläche und der Schalenstruktur wenigstens im Wesentlichen ermöglichen. Unter einer Verspannung der Anlagefläche mit der Schalenstruktur ist zu verstehen, dass die Anlagefläche fest an die Schalenstruktur gepresst wird. Dies kann beispielsweise, aber nicht nur, über eine Verschraubung, einen Knebelverschluss, eine Verkeilung oder andere Mittel bewerkstellig werden. Durch das Anliegen und Verspannen der Anlagefläche wird eine definierte Krafteinleitung verwirklicht, und Winkelabweichungen können vermieden werden. Die Kraft wird über eine große Fläche eingeleitet, was die Flächenpressung verringert und gerade bei dünnen Schalenstrukturen die Spannungen auf ein erträgliches Maß reduziert und so größere einleitbare Kräfte erlaubt.

Die Erfindung ist besonders vorteilhaft anwendbar auf eine Schalenstruktur, die aus GFK oder CFK, hergestellt ist. Besonders bei faserverstärkten Kunststoffen ist die Ausreißgefahr von Krafteinleitungspunkten hoch, sodass sie von der Erfindung in hohem Maß profitieren können.

In einer Ausführungsform der Erfindung ist das Beschlagteil aus Metall, insbesondere Eisen oder Stahl oder Aluminium oder einer Legierung mit wenigstens einem dieser Metalle, hergestellt. Besonders bei CFK-Bauteilen kommt oft ein Problem der Kontaktkorrosion mit Metallen vor, das durch die Verspannung und feste Anlage an der Anlagefläche wirksam reduziert werden kann.

In einer weiteren Ausführungsform der Erfindung ist das Beschlagteil ein blechförmiges, plattenförmiges oder scheibenförmiges Bauteil, wobei die Anlagefläche durch eine Kaltverformung oder eine Kröpfung bewirkt ist. Derartige Herstellungsprozesse sind kostengünstig realisierbar und in der Groß- und Massenfertigung einsetzbar. Alternativ kann das Beschlagteil auch ein massiveres, etwa (aber nicht nur) gegossenes Bauteil sein mit einem abgedrehten, abgefrästen, abgehobelten oder abgeräumten Absatz, der die Anlagefläche bildet.

In einer weiteren Ausführungsform der Erfindung ist das Beschlagteil mit der Schalenstruktur verklebt, wobei die Anlagefläche von Klebstoff frei ist. Durch eine Verklebung kann das Beschlagteil bereits vor Verspannung am gewünschten Ort fixiert werden, was die Herstellung erleichtert. Auch kann eine zusätzliche Versteifung der Schalenstruktur und weitere Krafteinleitung erzielt werden, die über eine größere Fläche verteilt ist. Da die Anlagefläche von Klebstoff frei ist, kann auch die Positionierung und Verspannung mit hoher Orts- und Lagegenauigkeit erfolgen. Wenn die Verklebung großflächig und umlaufend erfolgt, kann auch eine gute Abdichtungswirkung der Krafteinleitungsstelle erzielt werden.

In einer weiteren Ausführungsform der Erfindung weist das Beschlagteil oder die Schalenstruktur eine von der Anlagefläche zurückspringende Fläche auf, wobei die zurückspringende Fläche zur Verklebung mit der Schalenstruktur genutzt wird. Wenn die Schalenstruktur die zurückspringende Fläche aufweist, kann das Beschlagteil einfach und weniger aufwändig gestaltet sein. Da die Herstellung der Schalenstruktur ohnehin zumeist die Herstellung einer Form bedingt, kann dort auch eine zurückspringende Fläche oder umgekehrt eine zu der Anlagefläche des Schlagteils hin vorspringende Fläche vorgesehen sein. Wenn das Beschlagteil die zurückspringende Fläche aufweist, kann die Bauteiloberfläche der Schalenstruktur glatt gehalten werden. Auch muss der Vorsprung in der Form nicht vorgesehen werden, was auch ein nachträgliches Vorsehen von Krafteinleitungspunkten nach Laminierung der Schalenstruktur ermöglicht. An dem Beschlagteil kann die zurückspringende Fläche beispielsweise, aber nicht nur, durch einen Kaltverformungsprozess wie etwa einen Tiefziehvorgang hergestellt werden.

Wenn dabei die zurückspringende Fläche mit einer ihr gegenüberliegenden Fläche der Schalenstruktur wenigstens im Bereich der Verklebung einen Spalt von wenigstens im Wesentlichen gleichmäßigem Abstand ausbildet, kann auch die Klebekraft gleichmäßig bereitgestellt werden.

Die Gestaltung kann vorsehen, dass die Anlagefläche wenigstens im Wesentlichen eben ist. Das bedingt auch, dass die Gegenfläche der Schalenstruktur in diesem Bereich eben ist. Durch eine ebene Fläche kann auch eine Achsenlage der Krafteinleitungsstruktur genau definiert sein.

In einer weiteren Ausführungsform der Erfindung ist das Befestigungselement zur Befestigung eines Lastaufnahmeelements zur Aufnahme einer externen Last vorgesehen, wobei die Aufnahme der Last an dem Lastaufnahmeelement auf einer Seite der Schalenstruktur erfolgt, die derjenigen Seite, an welcher das Beschlagteil mit der Schalenstruktur verbunden ist, gegenüberliegt. Es kann so eine Sichtseite der Schalenstruktur, die einem Publikum zugewandt ist, von einer Beschlagseite, an welcher das Beschlagteil angebracht ist, unterschieden werden. Damit kann die Sichtseite von störenden Elementen freigehalten werden, wobei im Wesentlichen nur notwendige Anlenkpunkte für die Krafteinleitung auf der Sichtseite vorgesehen sind.

In einer weiteren Ausführungsform der Erfindung ist die Anlagefläche über das Befestigungselement mit einer Fläche der Schalenstruktur verspannt. Dies bedeutet, dass das Befestigungselement im Bereich der Anlagefläche vorgesehen ist. Hierdurch ist auch das Befestigungselement in seiner Lage und Stellung festgelegt. Das Befestigungselement wird zur Verspannung der Anlagefläche mit der Schalenstruktur mit genutzt, sodass für die Verspannung keine zusätzlichen Mittel vorzusehen sind. Alternativ ist es auch möglich, die Verspannung über gänzlich andere Mittel vorzunehmen und das Befestigungselement ausschließlich zur Kraftaufnahme zu nutzen.

In einer weiteren Ausführungsform der Erfindung weist das Befestigungselement ein Gewindeelement auf, das an dem Beschlagteil vorgesehen ist. Unter einem Gewindeelement ist im Sinne der Erfindung ein mit dem Beschlagteil verbundenes oder darin integriertes Bauteil mit einem Innen- oder Außengewinde oder ein darin ausgebildetes Innengewinde oder daran ausgebildetes Außengewinde zu verstehen.

In einer weiteren Ausführungsform der Erfindung ist das Gewindeelement von einer der Anlagefläche gegenüberliegenden Seite des Beschlagteils her an dem Beschlagteil befestigt, vorzugsweise mit diesem verbunden, insbesondere in ein in dem Beschlagteil ausgebildetes Durchgangsloch eingepresst. So kann das Gewindeelement dort angebracht werden, wo es nicht stört.

Wenn das Gewindeelement ein Bolzenteil aufweist, ist es vorzugsweise so ausgebildet, dass das Bolzenteil durch eine Öffnung in der Schalenstruktur hindurchragt. Wenn das Gewindeelement ein Muttergewinde aufweist, ist es vorzugsweise so ausgebildet, dass es nicht über die Anlagefläche hinausragt. Im letzteren Fall ist es vorteilhaft, wenn das Gewindeelement bzw. das Muttergewinde durch eine Öffnung in der Schalenstruktur hindurch zugänglich ist. Diese beiden Ausführungsalternativen stellen sicher, dass das Gewindeelement von der Sichtseite der Schalenstruktur aus zugänglich und nutzbar ist.

In einer weiteren Ausführungsform der Erfindung weist das Befestigungselement eine Einpressmutter auf, welche von einer der Anlagefläche gegenüberliegenden Seite des Beschlagteils her in ein in einem der Anlagefläche entsprechenden Abschnitt des Beschlagteils ausgebildetes Durchgangsloch eingepresst ist und welche nicht über die Anlagefläche hinausragt, wobei mittels einer Schraube, welche durch eine mit der Einpressmutter fluchtende Öffnung in der Schalenstruktur hindurch in die Einpressmutter zu führen ist, die Anlagefläche mit der Schalenstruktur verspannbar oder verspannt ist, wobei mittels der Schraube gleichzeitig ein Lastaufnahmeelement zur Aufnahme einer externen Last auf einer dem Beschlagteil gegenüberliegenden Seite der Schalenstruktur her festlegbar oder festgelegt ist. Dieses Verschraubungskonzept ermöglicht höherfeste Verschraubungen mit CFK-Bauteilen, ohne diese zu beschädigen und ohne korrosive Nachteile und mit einer flächigen Krafteinleitung in das CFK-Bauteil für industrialisierte Anwendung mit hohen Stückzahlen.

In einer vorteilhaften Weiterbildung der Erfindung ist eine Abdeckung vorgesehen, welche das Beschlagteil abdeckt, wobei die Abdeckung vorzugsweise umlaufend mit dem der Schalenstruktur verklebt ist. Dadurch kann Feuchtigkeit, die eventuell an der Stelle des Krafteinleitungspunkts von der Sichtseite her auf die Rückseite dringt, aufgefangen werden und kann auch einen Hohlraum, der von der Schalenstruktur abgeschlossen wird, nicht kontaminieren.

Die Erfindung ist besonders vorteilhaft, aber nicht nur, auf eine Schalenstruktur anwendbar, die ein Karosserieteil eines Fahrzeugs, insbesondere eines Kraftfahrzeugs, ist.

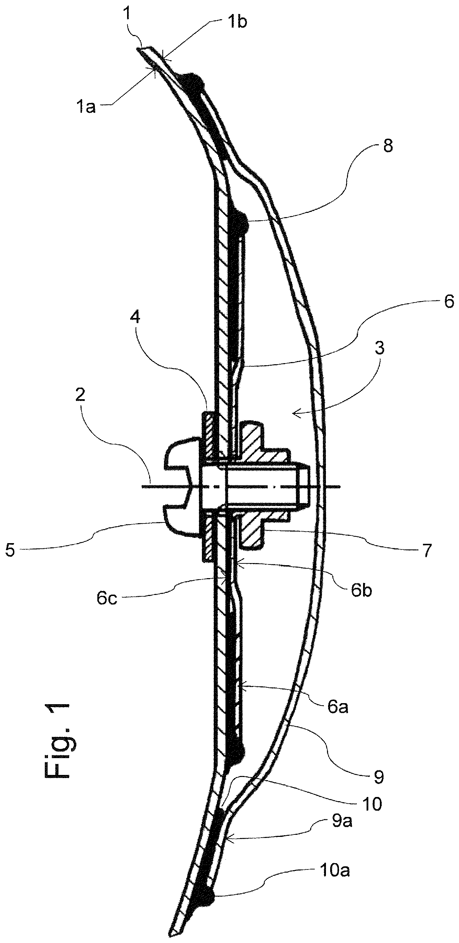

Weitere Merkmale, Aufgaben und Wirkungen der Erfindung ergeben sich aus der Beschreibung und der beigefügten Zeichnung. Dabei gelten Merkmale und Details, die im Zusammenhang mit der erfindungsgemäßen Vorrichtung beschrieben sind, selbstverständlich auch im Zusammenhang mit allen Abwandlungen und jeweils umgekehrt und wechselweise, so dass bezüglich der Offenbarung zu den einzelnen Erfindungsaspekten und -formen stets wechselseitig Bezug genommen wird beziehungsweise werden kann.

Die einzige Figur zeigt eine schematische Darstellung einer Verschraubung als ein Ausführungsbeispiel der vorliegenden Erfindung.

Nachstehend wird ein bevorzugtes Ausführungsbeispiel der Erfindung anhand der beigefügten Zeichnung beschrieben. Dabei sind gleiche Bauteil jeweils mit den gleichen Bezugszeichen versehen. Bauelemente und Merkmale, Zwecke und Wirkungen, die in Bezug auf das Ausführungsbespiel beschrieben werden, sind, soweit nicht ausdrücklich oder ersichtlich ausgeschlossen, als in jeder Abwandlung und alternativen Ausführungsform anwendbar anzunehmen und sollen auch in Bezug auf diese als offenbart gelten, auch wenn sie dort nicht ausdrücklich gezeigt und/oder beschrieben werden. Es versteht sich ferner, dass die Zeichnung als schematisch zu verstehen ist und ihr keine Einschränkungen im Hinblick auf konkrete Abmessungen oder Größenverhältnisse entnommen werden sollen, es sei denn, dies wäre ausdrücklich so beschrieben.

Die Figur zeigt einen Ausschnitt eines CFK-Bauteils 1, in welchem ein Krafteinleitungspunkt 2 ausgebildet ist. Der Krafteinleitungspunkt 2 ist als eine Verschraubung ausgebildet, deren Lage durch eine Mittellinie 2 symbolisiert ist, und durch einen Einleger 3 verwirklicht, der mit dem Bauteil 1 verbunden ist. In dem dargestellten Ausführungsbeispiel ist an dem durch die Mittellinie 2 definierten Punkt ein Gurtschloss 4 mittels einer Schraube 5 an dem Einleger 3 angeschraubt. Die Mittellinie 2 definiert eine Lage jeweiliger Durchgangsbohrungen (nicht näher bezeichnet) in dem Bauteil 1 und in dem Gurtschloss 4 und eine Verschraubungsachse des Einlegers 3.

Gemäß der Darstellung in der Figur weist der Einleger 5 eine Platte 6 auf, die in diesem Ausführungsbeispiel aus Stahl hergestellt ist. Die Platte 6 weist einen Randbereich 6a und eine um die Mittellinie 2 herum ausgebildete Einsenkung 6b auf. Die Einsenkung 6b ist durch Kaltverformung wie etwa Tiefziehen ausgebildet und bildet auf der gegenüberliegenden Seite eine Erhöhung mit einer Anlagefläche 6c aus, die an dem Bauteil 1 anliegt. Die Anlagefläche 6c ist zu den Flächen des Randbereichs 6a parallel.

Im Bereich der Mittellinie 2 ist ein Durchgangsloch (nicht näher dargestellt) in der Platte 6 ausgebildet. Das Durchgangsloch kann eine Bohrung sein oder kann alternativ durch Stanzen, beispielsweise gleichzeitig mit dem Tiefziehen der Einsenkung 6b, ausgebildet sein. In dem Durchgangsloch in der Einsenkung 6b ist eine Setzmutter bzw. Einpressmutter 7 angebracht. Die Einpressmutter 7 weist einen Hauptkörper mit einem Schaftteil (nicht näher bezeichnet) und einem im Anlagebereich verbreiterten Schulterteil (nicht näher bezeichnet) sowie einen Kragen (nicht näher bezeichnet) auf. Mit einem geeigneten Einpresswerkzeug ist der Kragen der Einpressmutter 7 in das Durchgangsloch der Platte 6 eingepresst und weist eine feste physikalische Verbindung mit dem Material der Platte 6 auf. Die Einpressmutter 7 ragt auf der Anlageseite über die Anlagefläche 6c nicht hinaus, sondern ist mit dieser bündig. Je nach Dicke der Platte 6 kann die Einpressmutter 7 auch hinter der Anlagefläche 6c zurückweichen, d.h., in dem Durchgangsloch verschwinden.

Im Randbereich 6a ist die Platte 6 mittels einer Kleberschicht 8 mit dem Bauteil 1 verklebt. Die Kleberschicht 8 wird hierzu auf den Randbereich 6a in einer Dicke, die größer als eine Einsenktiefe der Einsenkung 6b ist, aufgebracht und die Platte 6 anschließend auf die Rückseite 1b des Bauteils 1 gesetzt, sodass die Einpressmutter 7 mit der Mittellinie 2 fluchtet, und anschließend angepresst, sodass der Kleber 8 sich mit dem Bauteil 1 und der Platte 6 verbindet. Die Pressung ist so bemessen, dass die Anlagefläche 6c auf der Rückseite 1b des Bauteils 1 aufliegt. Ferner ist die Menge und Lage des Klebers 8 so bemessen, dass eine gewisse Klebermenge seitlich aus dem Klebespalt austritt und eine Wulst (nicht näher bezeichnet) bildet, während nach innen die Anlagefläche 6c frei von Kleber bleibt.

Eine Abdeckung 9 aus Kunststoff in einer Größe, die ausreichend ist, um den Einleger 3 samt Schraube 5 abzudecken, ist über den Einleger 3 gesetzt und in einem Randbereich 9a mittels einer Kleberschicht 10 mit der Rückseite 1b des Bauteils 1 verklebt. Durch die Abdeckung 9 kann eventuell durch die Einpressmutter 7 dringende Feuchtigkeit von einem durch das Bauteil 1 begrenzten Raum ferngehalten werden. Eine Kleberwulst 10a schützt die Schnittkante der Abdeckung 9.

Bei der Montage wird das Gurtschloss 4 auf die Sichtseite 1a des Bauteils gelegt, so dass eine darin vorgesehene Durchgangsbohrung mit der Durchgangsbohrung des Bauteils 1 fluchtet. Sodann wird die Schraube 5 durch die Durchgangsbohrungen des Gurtschlosses 4 und des Bauteils 1 hindurch in die Einpressmutter 7 eingeschraubt und festgezogen. Hierdurch wird die Anlagefläche 6c fest an die Rückseite 1b des Bauteils 1 gepresst und verspannt. Durch die Anlagefläche 6c wird eine über den Beschlag 3 eingeleitete Kraft weitflächig in das Bauteil 1 eingeleitet. Die Abdeckung 9 bildet eine weitere Versteifung des Bauteils 1 aus.

Es versteht sich, dass das vorstehend beschriebene Ausführungsbeispiel in vielen Einzelheiten rein beispielhaft ist, um das Grundprinzip der Erfindung zu erläutern.

Das Bauteil 1 kann anstelle von CFK auch aus GFK oder jedem anderen Material hergestellt sein.

Anstelle einer Durchgangsbohrung kann in dem Bauteil 1 auch eine andere Öffnung wie etwa ein Langloch vorgesehen sein, um eine gewisse Justierbarkeit bereitzustellen.

Die Platte 6 kann aus einem beliebigen, hinreichend festen Material hergestellt sein. So kann anstelle von Stahl auch Aluminium oder eine Legierung verwendet werden.

Anstelle der Einpressmutter 7 kann auch eine Anschweißmutter mit oder ohne Schweißbuckeln und/oder Flansch, eine Annietmutter, ein Jetlog-Anker, ein Gewindeniet, eine Einzieh- bzw. Blindnietmutter oder jede andere geeignete Mutternform, die rückwärtig an der Platte 6 anbringbar ist, verwendet werden oder ein mit einem Innengewinde versehener Blechdurchzug in der Platte ausgebildet sein. Wenn die Durchgangsbohrung in dem Bauteil 1 weit genug ist, um einen Überstand aufzunehmen, kann anstelle der Einpressmutter 7 auch eine Bördelmutter, Nietmutter oder dergleichen verwendet werden, wobei ein Bördel oder Nietkranz von der Durchgangsbohrung in dem Bauteil 1 aufgenommen wird. Wenn ein Mutterbauteil einen Überstand in beschriebener Weise aufweist, kann, insbesondere wenn die Durchgangsbohrung im Bauteil 1 mit diesem Überstand auf Passung ausgelegt ist, eine Zentrierung des Einlegers 3 mit der Durchgangsbohrung im Bauteil 1, d.h. eine exakte Ausrichtung mit der Achse 2, erleichtert werden.

Anstelle eines Mutterteils kann auch ein Schraubenteil, etwa ein Einpressbolzen, Annietbolzen oder dergleichen, der durch das Durchgangsloch im Bauteil 1 ragt, verwendet werden. Ein solches Schraubenteil kann dann von der Sichtseite 1a des Bauteils 1 mittels einer Mutter zur Befestigung des Gutschlosses 4 verwendet werden.

Die Platte 6 ist in dem beschriebenen Ausführungsbeispiel als Scheibe mit einer Einsenkung 6b ausgebildet. Diese Form ist rein beispielhaft. Anstelle einer Scheibe kann auch ein Blech von quadratischem, rechteckigem oder streifenförmigem Zuschnitt verwendet werden, das eine Einsenkung aufweist oder einseitig oder zweiseitig gekröpft ist.

Der Einleger 3 kann anstelle der Platte 6 und der Einpressmutter 7 auch ein einstückiges Bauteil, etwa ein Gussteil, mit integriertem Muttergewinde aufweisen. Wichtig im Sinne der Erfindung ist die Anlagefläche 6c, die fest an dem Bauteil 1 anliegt und damit verspannt wird, sodass eine definierte Anlage mit dem Bauteil 1, die frei von Kleber ist, sichergestellt ist.

Die Abdeckung 9 ist optional. Sie ist insbesondere vorteilhaft bei Bauteilen 1, die an ihrer Rückseite 1b einen Hohlraum abschließen.

Es versteht sich, dass auch das Gurtschloss 2 lediglich als Beispiel für jedes beliebige anschraubbare Befestigungselement dient.

Die Erfindung wurde vorstehend anhand eines bevorzugten Ausführungsbeispiels sowie mehrerer Ausführungsvarianten, -alternativen und Abwandlungen beschrieben und in der Figur veranschaulicht. Diese Beschreibungen und Darstellungen sind rein schematisch und schränken den Schutzumfang der Ansprüche nicht ein, sondern dienen nur deren beispielhafter Veranschaulichung. Es versteht sich, dass die Erfindung auf vielfältige Weise ausgeführt und abgewandelt werden kann, ohne den Schutzumfang der Patentansprüche zu verlassen.

Im Sinne der Erfindung ist das Bauteil 1 eine Schalenstruktur, bilden der Einleger 3, der die Platte 6 und die Einpressmutter 7 aufweist, eine Krafteinleitungsstruktur, ist die Platte 6 ein Beschlagteil, ist die Einpressmutter 7 ein Befestigungselement bzw. ein Gewindeelement, ist die Anlagefläche 6c mittels der Schraube 5 und der Einpressmutter 7 mit der Schalenstruktur (Bauteil 1) verspannt, bildet der Randbereich 6a eine zurückspringende Fläche aus, ist das Gurtschloss 4 ein Lastaufnahmeelement und bildet die Verklebung 8 eine weitere Verbindung des Beschlagteils (Platte 6) mit der Schalenstruktur (Bauteil 1).

Einer speziellen Ausführungsform der Erfindung liegt der Gedanke zu Grunde, dass Verschraubungen an Schalenstrukturen, insbesondere CFK-Bauteilen, mit höherer Festigkeitsklasse mit Hilfe von Stahl- bzw. Aluminiumeinlegern mit Einpresselementen (Einpressmutter, Einpressbolzen) dargestellt werden können. Dieses Verschraubungskonzept ermöglicht höherfeste Verschraubungen mit CFK- und dergleichen Bauteilen, ohne diese zu beschädigen, ohne korrosive Nachteile und mit einer flächigen Krafteinleitung in das CFK Bauteil für industrialisierte Anwendung mit hohen Stückzahlen.

### Bezugszeichenliste

- 1: CFK-Bauteil
- 1a: Sichtseite
- 1b: Rückseite
- 2: Befestigungspunkt (Anschraubachse)
- 3: Einleger
- 4: Gurtschloss
- 5: Schraube
- 6: Platte
- 6a: Randbereich
- 6b: Einsenkung
- 6c: Anlagefläche
- 7: Einpressmutter
- 8: Kleber
- 9: Abdeckung
- 10: Kleber

## Patentansprüche

1. Schalenstruktur (1) mit einem Krafteinleitungspunkt (2), wobei an dem Krafteinleitungspunkt (2) eine Krafteinleitungsstruktur (3, 4, 5) vorgesehen ist, wobei die Krafteinleitungsstruktur (3, 4, 5) ein Beschlagteil (6) mit einem Befestigungselement (7) aufweist, wobei das Beschlagteil (6) mit der Schalenstruktur (1) verbunden ist,
**dadurch gekennzeichnet, dass**
das Beschlagteil (6) eine Anlagefläche (6c) mit der Schalenstruktur (1) aufweist und die Anlagefläche (6c) mit der Schalenstruktur (1) verspannbar oder verspannt ist, wobei die Schalenstruktur (1) aus faserverstärktem Kunststoff hergestellt ist.

2. Schalenstruktur (1) nach Anspruch 1, **dadurch gekennzeichnet, dass** die Schalenstruktur (1) aus GFK oder CFK hergestellt ist.

3. Schalenstruktur (1) nach einem der vorstehenden Ansprüche, **dadurch gekennzeichnet, dass** das Beschlagteil (6) aus Metall, insbesondere Eisen oder Stahl oder Aluminium oder einer Legierung mit wenigstens einem dieser Metalle, hergestellt ist.

4. Schalenstruktur (1) nach einem der vorstehenden Ansprüche, **dadurch gekennzeichnet, dass** das Beschlagteil (6) ein blechförmiges,
plattenförmiges oder scheibenförmiges Bauteil ist, wobei die Anlagefläche (6c) durch eine Kaltverformung oder eine Kröpfung bewirkt ist.

5. Schalenstruktur (1) nach Anspruch 1,
**dadurch gekennzeichnet, dass**
das Beschlagteil (6) mit der Schalenstruktur (1) verklebt ist, wobei die Anlagefläche (6c) von Klebstoff (8) frei ist.

6. Schalenstruktur (1) nach Anspruch 1 oder 2,
**dadurch gekennzeichnet, dass**
das Beschlagteil (6) oder die Schalenstruktur (1) eine von der Anlagefläche (6c) zurückspringende Fläche (6a) aufweist, wobei die zurückspringende Fläche (6a) zur Verklebung (8) mit der Schalenstruktur (1) genutzt wird.

7. Schalenstruktur (1) nach Anspruch 6,
**dadurch gekennzeichnet, dass**
die zurückspringende Fläche (6a) mit einer ihr gegenüberliegenden Fläche (1b) der Schalenstruktur (1) wenigstens im Bereich der Verklebung (8) einen Spalt von wenigstens im Wesentlichen gleichmäßigem Abstand ausbildet.

8. Schalenstruktur (1) nach einem der vorstehenden Ansprüche,
**dadurch gekennzeichnet, dass**
die Anlagefläche (6c) wenigstens im Wesentlichen eben ist.

9. Schalenstruktur (1) nach einem der vorstehenden Ansprüche,
**dadurch gekennzeichnet, dass**
das Befestigungselement (7) der Befestigung eines Lastaufnahmeelements (4) zur Aufnahme einer externen Last dient, wobei die Aufnahme der Last an dem Lastaufnahmeelement (4) vorzugsweise auf einer Seite der Schalenstruktur (1) erfolgt, die derjenigen Seite, an welcher das Beschlagteil (6) mit der Schalenstruktur (1) verbunden ist, gegenüberliegt.

10. Schalenstruktur (1) nach einem der vorstehenden Ansprüche,
**dadurch gekennzeichnet, dass**
die Anlagefläche (6c) über das Befestigungselement (7) mit einer Fläche der Schalenstruktur (1) verspannt ist, wobei das Befestigungselement (7) vorzugsweise ein Gewindeelement (7) aufweist, das an dem Beschlagteil (6) vorgesehen ist.

11. Schalenstruktur (1) nach Anspruch 10, **dadurch gekennzeichnet, dass** das Gewindeelement (7) von einer der Anlagefläche (6c) gegenüberliegenden Seite des Beschlagteils (6) her an dem Beschlagteil (6) befestigt, vorzugsweise mit diesem verbunden, insbesondere in ein in dem Beschlagteil (6) ausgebildetes Durchgangsloch eingepresst, ist.

12. Schalenstruktur (1) nach Anspruch 10 oder 11, **dadurch gekennzeichnet, dass** das Gewindeelement (7) ein Muttergewinde aufweist und vorzugsweise nicht über die Anlagefläche (6c) hinausragt oder ein Bolzenteil aufweist, das vorzugsweise durch eine Öffnung in der Schalenstruktur (1) hindurchragt.

13. Schalenstruktur (1) nach einem der vorstehenden Ansprüche, **dadurch gekennzeichnet, dass** das Befestigungselement (7) eine Einpressmutter (7) aufweist, welche von einer der Anlagefläche (6c) gegenüberliegenden Seite des Beschlagteils (6) her in ein in einem der Anlagefläche (6c) entsprechenden Abschnitt des Beschlagteils (6) ausgebildetes Durchgangsloch eingepresst ist und welche nicht über die Anlagefläche (6c) hinausragt, wobei mittels einer Schraube (5), welche durch eine mit der Einpressmutter (7) fluchtende Öffnung in der Schalenstruktur (1) hindurch in die Einpressmutter (7) zu führen ist, die Anlagefläche (6c) mit der Schalenstruktur (1) verspannbar oder verspannt ist, wobei mittels der Schraube (5) gleichzeitig ein Lastaufnahmeelement (4) zur Aufnahme einer externen Last auf einer dem Beschlagteil (6) gegenüberliegenden Seite (1a) der Schalenstruktur (1) her festlegbar oder festgelegt ist.

14. Schalenstruktur (1) nach einem der vorstehenden Ansprüche, **dadurch gekennzeichnet, dass** eine Abdeckung (9) vorgesehen ist, welche das Beschlagteil (6) abdeckt, wobei die Abdeckung (9) vorzugsweise umlaufend mit der Schalenstruktur (1) verklebt ist.

15. Schalenstruktur (1) nach einem der vorstehenden Ansprüche, **dadurch gekennzeichnet, dass** die Schalenstruktur (1) ein Karosserieteil eines Fahrzeugs, insbesondere eines Kraftfahrzeugs, ist.

## Claims

1. A shell structure (1) with a force introduction point (2), wherein a force introduction structure (3, 4, 5) is provided at the force introduction point (2), wherein the force introduction structure (3, 4, 5) has a fitting part (6) with a fastening element (7), wherein the fitting part (6) is connected to the shell structure (1),
**characterised in that**
the fitting part (6) has a contact surface (6c) with the shell structure (1) and the contact surface (6c) can be braced or is braced with the shell structure (1), the shell structure (1) being produced from fibre-reinforced plastics material.

2. A shell structure (1) according to Claim 1,
**characterised in that**
the shell structure (1) is produced from GFRP or CFRP.

3. A shell structure (1) according to one of the preceding claims,
**characterised in that**
the fitting part (6) is produced from metal, epecially iron or steel or aluminium or an alloy with at least one of these metals.

4. A shell structure (1) according to one of the preceding claims,
**characterised in that**
the fitting part (6) is a sheet-metal-shaped, plate-shaped or disc-shaped component, the contact surface (6c) being produced by cold deformation or offset bending.

5. A shell structure (1) according to Claim 1,
**characterised in that**
the fitting part (6) is glued to the shell structure (1), the contact surface (6c) being free from adhesive (8).

6. A shell structure (1) according to Claim 1 or Claim 2,
**characterised in that**
the fitting part (6) or the shell structure (1) has a surface (6a) set back from the contact surface (6c), the set-back surface (6a) being used for gluing (8) to the shell structure (1).

7. A shell structure (1) according to Claim 6,
**characterised in that**
the set-back surface (6a), with a surface (1b) of the shell structure (1) which is located opposite it, forms a gap of at least substantially uniform distance at least in the region of the gluing (8).

8. A shell structure (1) according to one of the preceding claims,
**characterised in that**
the contact surface (6c) is at least substantially flat.

9. A shell structure (1) according to one of the preceding claims,
**characterised in that**
the fastening element (7) serves for fastening a load absorption element (4) for absorbing an external load, the load being absorbed on the load absorption element (4) preferably on a side of the shell structure (1) which lies opposite that side on which the fitting part (6) is connected to the shell structure (1).

10. A shell structure (1) according to one of the preceding claims,
**characterised in that**
the contact surface (6c) is braced with a surface of the shell structure (1) by means of the fastening element (7), the fastening element (7) preferably having a threaded element (7) which is provided on the fitting part (6).

11. A shell structure (1) according to Claim 10,
**characterised in that**
the threaded element (7) is fastened to the fitting part (6), preferably connected thereto, especially pressed into a through-hole formed in the fitting part (6), from a side of the fitting part (6) which is located opposite the contact surface (6c).

12. A shell structure (1) according to Claim 10 or Claim 11,
**characterised in that**
the threaded element (7) has a nut thread and preferably does not project beyond the contact surface (6c) or has a bolt part which preferably projects through an opening in the shell structure (1).

13. A shell structure (1) according to one of the preceding claims,
**characterised in that**
the fastening element (7) has a press nut (7) which, from a side of the fitting part (6) which is located opposite the contact surface (6c), is pressed into a through-hole formed in a portion of the fitting part (6) which corresponds to the contact surface (6c), and which does not project beyond the contact surface (6c), with the contact surface (6c) being able to be braced or being braced with the shell structure (1) by means of a screw (5) which is to be guided through an opening, which is flush with the press nut (7), in the shell structure (1) into the press nut (7), with at the same time a load absorption element (4) for absorbing an external load being able to be fixed or being fixed by means of the screw (5) to a side (1a) of the shell structure (1) which is located opposite the fitting part (6).

14. A shell structure (1) according to one of the preceding claims,
**characterised in that**
a covering (9) is provided which covers the fitting part (6), the covering (9) preferably being glued in circumambient manner to the shell structure (1).

15. A shell structure (1) according to one of the preceding claims,
**characterised in that**
the shell structure (1) is a vehicle body part of a vehicle, especially of a motor vehicle.

## Revendications

1. Structure de coque (1) comprenant un point d'application de force (2) sur lequel il est prévu une structure d'introduction de force (3, 4, 5), comprenant une ferrure (6) ayant un élément de fixation (7), la ferrure (6) étant reliée à la structure de coque (1),
**caractérisée en ce que**
la ferrure (6) comporte une surface d'appui (6c) sur la structure de coque (1) et la surface d'appui (6c) peut être serrée ou est serrée sur la structure de coquille (1), la structure de coquille (1) étant réalisée en un matériau synthétique renforcé par des fibres.

2. Structure de coque (1) conforme à la revendication 1,
**caractérisée en ce qu'**
elle est réalisée en matériau synthétique renforcé par des fibres de verre ou de carbone.

3. Structure de coque (1) conforme à l'une des revendications précédentes,
**caractérisée en ce que**
la ferrure (6) est réalisée en métal, en particulier en fer, en acier ou en aluminium ou en un alliage renfermant au moins l'un de ces métaux.

4. Structure de coque (1) conforme à l'une des revendications précédentes,
**caractérisée en ce que**
la ferrure (6) est une pièce en forme de tôle, de plaque ou de disque, la surface d'appui (6c) étant obtenue par formage à froid ou cintrage.

5. Structure de coque (1) conforme à la revendication 1,
**caractérisée en ce que**
la ferrure (6) est collée à la structure de coque (1), la surface d'appui (6c) étant exempte de colle (8).

6. Structure de coque (1) conforme à la revendication 1 ou 2,
**caractérisée en ce que**
la ferrure (6) ou la structure de coque (1) comporte une surface (6a) en retrait par rapport à la surface d'appui (6c), la surface en retrait (6a) étant utilisée pour permettre le collage (8) avec la structure de coque (1).

7. Structure de coque (1) conforme à la revendication 6,
**caractérisée en ce que**
la surface en retrait (6a) forme, avec la surface (1b) opposée à celle-ci de la structure de coque (1) au moins dans la zone du collage (8) un intervalle de dimension au moins essentiellement uniforme.

8. Structure de coque (1) conforme à l'une des revendications précédentes,
**caractérisée en ce que**
la surface d'appui (6c) est au moins essentiellement plane.

9. Structure de coque (1) conforme à l'une des revendications précédentes,
**caractérisée en ce que**
l'élément de fixation (7) sert à la fixation d'un élément de réception de charge (4) permettant de recevoir une charge externe, la réception de la charge par l'élément de réception de charge (4) s'effectuant de préférence sur le côté de la structure de coque (1) qui est opposé au côté sur lequel la ferrure (6) est reliée à la structure de coque (1).

10. Structure de coque (1) conforme à l'une des revendications précédentes,
**caractérisée en ce que**
la surface d'appui (6c) est serrée sur une surface de la structure de coque (1) par l'intermédiaire de l'élément de fixation (7), cet élément de fixation étant de préférence un élément fileté (7) qui est prévu sur la ferrure (6).

11. Structure de coque (1) conforme à la revendication 10,
**caractérisée en ce que**
l'élément fileté (7) est fixé à la ferrure (6) par son côté opposé à la surface d'appui (6c) et est, de préférence relié à cette ferrure (6), et en particulier, introduit à force dans un perçage traversant formé dans celle-ci (6).

12. Structure de coque (1) conforme à la revendication 10 ou 11,
**caractérisée en ce que**
l'élément fileté (7) comporte un filetage femelle et de préférence ne dépasse pas de la surface d'appui (6c) ou comporte un boulon qui pénètre de préférence au travers d'une ouverture de la structure de coque (1).

13. Structure de coque (1) conforme à l'une quelconque des revendications précédentes,
**caractérisée en ce que**
l'élément de fixation est constitué par un écrou encastré (7) qui est introduit à force par le côté de la ferrure (6) opposé à la surface d'appui (6c) dans un perçage traversant formé dans un segment de la ferrure (6) correspondant à la surface d'appui (6c) et qui ne dépasse pas de la surface d'appui (6c), et, la surface d'appui (6c) peut être serrée ou est serrée avec la structure de coque (1) au moyen d'une vis (5) destinée à être introduite dans l'écrou encastré (7) au travers d'une ouverture de la structure de coque (1) à fleur avec l'écrou encastré (7), et au moyen de la vis (5), peut être ou est fixé simultanément, un élément de réception de charge (4) permettant de recevoir une charge externe sur le côté (1a) de la structure de coque (1) opposé à la ferrure (6).

14. Structure de coque (1) conforme à l'une des revendications précédentes,
**caractérisée en ce qu'**
il est prévu un recouvrement (9) qui recouvre la ferrure (6), le recouvrement (9) étant de préférence collé sur sa périphérie sur la structure de coque (1).

15. Structure de coque (1) conforme à l'une des revendications précédentes,
**caractérisée en ce que**
la structure de coque (1) est une pièce de carrosserie d'un véhicule, en particulier, d'un véhicule automobile.
